# EUROPEAN PATENT APPLICATION

(11) **EP 2 214 334 A1**
(43) Date of publication of application: **04.08.2010**
(21) Application number: 08736699.3
(22) Date of filing: 22.02.2008
(51) Int. Cl.: H04H 60/46, H02J 13/00

(54) **DEVICE FOR MEASURING CONSUMPTION PATTERNS THROUGH THE ELECTRIC MAINS AND METHOD FOR USE**

(30) Priority: 17.10.2007 ES 200702723
(71) Applicant: Mediciones Eléctricas de Andalucía, S.L., 29590 Campanilla (Màlaga) (ES)
(72) Inventor: DIAZ VILLALTA, Antonio, E-28006 Madrid (ES); ROSADO, RIOS, Juan, E-280060 Madrid (ES); FLORES VERA, Rafael, E-28006 Madrid (ES); GONZALEZ OTERO, Gerardo, E-2800 Madrid (ES)
(74) Representative: De la Fuente Fernandez, Dionisio
(86) International application number: PCT/ES2008/000095
(87) International publication number: WO 2008/102039

(57) **Abstract**

The invention relates to a device for measuring consumption patterns through the electric network and method for the use thereof, comprising a microcontroller/processing unit control block (2) and another auxiliary device; a modulator/demodulator communications unit (3); a supply block (4), which transforms the available supply into the voltages (8) suitable for the operation of the device (1); and a measuring block (5) for measuring the electric consumption on the line (7) of the electric network, the conditioning of this measurement, comparison thereof, if necessary, with a predetermined consumption pattern, and the sending thereof to the communications block (3). A first example establishes a device for identifying the television programmes viewed on a television in order to measure audiences. A second example allows identifying the type of electric equipment associated with the electric line which allows compiling of statistics and subsequent studies.

## Description

### DEVICE FOR MEASURING CONSUMPTION PATTERNS THROUGH THE ELECTRIC

### NETWORK AND METHOD FOR THE USE THEREOF

### Object of the Invention

As expressed in the title of the present specification, the invention relates to a device for measuring consumption patterns through the electric network.

More specifically, the object of the invention of the base patent consists of a device for taking measurements of the electric consumption in a line or cable of the electric distribution network, processing said measurements to determine consumption patterns of the group of users who use the line corresponding to that distribution point, allowing sending them, for example, to a remote system for treating said information.

Particular characteristics of the electric equipment performing the consumption can be determined by means of a comparison with predetermined patterns. A method for identifying the television programmes viewed in a television in order to measure audiences is established in a first embodiment.

A second embodiment establishes a method which allows identifying the type of equipment or electric equipment associated with the line of the electric distribution network to allow compiling of statistics and subsequent studies.

### Background of the Invention

It must be mentioned that currently, and as a reference to the state of the art, audience is generally measured with a limited number of individual terminals installed in homes, which (for the most part) consist of a remote control knob which must be pushed manually by the television viewer every time he changes channels. These changes are stored in the memory of the device.

There are also devices for measuring audience with a microphone which is in charge of detecting the sound of the channel which is tuned in at any time, sending the information at the end of the day to the control center. There is no knowledge of any system which measures audience, on an individual or group level, through the electric network, identifying and quantifying the channel that is being viewed by the consumption that the television receiver or receivers demand of the electric supply network upon amplifying the audio and/or video signals coming from the station, and which does not violate the privacy of the group being sampled.

It must also be mentioned that the applicant is aware of some documents relating to the invention, including:
- Document DE-10056134, relating to a method for "Detecting receivers connected to electrical network simultaneously receiving defined transmitter involves modulating transmitter image signal with signal influencing power drawn".
- And document DE-19733414, relating to a system for the "Measurement of TV receivers tuned to specific programme - has correlator which measures power taken over time period to relate picture to programme selected".

It should be pointed out, however, that in both cases, although the objectives are similar, the differences with the present invention, as could be verified, differ greatly, specifically in the following aspects:

The present invention essentially works from the current consumption generated by the audio amplifiers of both radio and television, because for the case of televisions the consumption generated by the image is different according to the different types of televisions, whereby the information that can be obtained about consumptions produced by the image is not representative.

Unlike the previously mentioned documents, the invention herein described compares, in addition to the video signal, the envelope of the consumption generated by the audio amplifiers by filtering, amplifying and integrating the consumptions of the audio signal of the pattern signals of each channel to be observed and of the signal that is read at one point of the electric network for analysis thereof.

Furthermore, the envelope of the total consumption of the network is compared with the envelope of the consumption of each of the channels, thus calculating which percentage of the signal corresponds to each of the channels. Due to the fact that the current consumptions will be higher or lower according to higher or lower volume in a home, not only is the number of televisions which are viewing a channel in particular (since this could provide misleading information) calculated, but the percentage of homes which are viewing one channel or another is also statistically calculated. Said information is crossed with the resident population in the area where the sample has been taken in order to thus obtain the number percentages of people viewing or listening to one television or radio channel or another.

Another difference is due to the fact that the proposed invention has a communication component integrated therein for sending the signal to a control center in which the signal is automatically processed, which thus allows having on-line information about what is happening in relation to audiences.

It can therefore be affirmed that the applicant is unaware of the existence of any other device for measuring consumption patterns through the electric network having technical, structural and configuration features similar to those of the device that is herein described.

### Summary of the Invention

The device for measuring consumption patterns through the electric network described by the present invention which, as mentioned, consists of a device measuring the electric consumptions at any point of the electric distribution network in which it is installed, is configured as an evident novelty within its field of application, because the installation thereof specifically results in a system which allows generating from said measurements information about consumption patterns of the inhabitants serviced by the electric network from the chosen point of measurement, which furthermore allows transmitting said information to a remote system for subsequent processing and presentation thereof.

It should be pointed out that there is currently a great deal of information in the electric network which is not suitably analyzed or used. The system of measurement proposed by the device of the present invention allows advantageously analyzing, in a non-intrusive manner and without violating the individual privacy of the people residing in the sampled areas, the consumption habits of any electric apparatus in a specific geographic area.

Therefore, upon performing measurements and analyses on points of the distribution network using that distribution point, the privacy of each home is respected because the data obtained represent a group of homes, which are variable according to the characteristics of the distribution point in each area.

To that end, the device of the invention has the following functions:
- Taking measurements of the electric consumption in a line or cable of the electric distribution network.
- Processing said measurements to obtain a consumption pattern of the users serviced from this electric distribution center.
- With respect to said measurements, a) they can be sent to a remote information processing system, where said information will be treated in the manner which best serves the specific application of the system, or b) the device object of the invention can perform a comparison with predetermined patterns in order to infer information about the volume of consumers following a certain consumption pattern, which it ultimately sends to the same remote information processing system.
- Sending to the remote system another type of information about its own operation (malfunction notification, state of the device, etc.).
- Additionally receiving information from the remote information processing system to modify its performance or to be able to establish the predetermined patterns mentioned in the previous point.

In addition, in all the communications to and from the remote system, the device for measuring object of this invention will be identified by means of a single identifier with which it is provided in order to be distinguished from any other device for measuring which may be simultaneously installed in the distribution network, and to thus be able to distinguish the measurements generated by each of them.

Therefore, the objective of the invention is to allow identifying consumption patterns in the line on which the device operates for subsequent comparison thereof with predetermined patterns, or to send these patterns to a control center in which this comparison is performed.

The comparison allows identifying the type of electric equipment that is operating in the line.

The basis of the operation of the system consists of detecting the energy consumption of a television receiver or of all the receivers of a certain area under the control of the device.

Each television connected and tuned into a channel will give rise to variable power consumption due, among other reasons, to the audio and/or of video signal that it is amplifying at that time.

This consumption variation translates into intensity variations caused by the amplification of said audio and/or video signals. The sum of a certain number of receivers of an area tuned into the same channel will cause the sum of the intensity oscillations in the typical electric network of the audio and/or video signal amplified at that time.

This sum of the signal allows determining the number of televisions that are watching one and the same channel.

This signal, obtained for example from a single television receiver, or from a group of homes, or from an electric distribution center or from a specific point of the network, in the preferred embodiment, is transmitted to the control center, where the sample signal will be compared with each of the original of audio and/or video signals of the stations making up the audience study, obtaining the values for each of the comparisons.

For this reason, the control center must have video and audio signal input of the channels to be established as patterns of comparison.

It is said that the sample signal is preferably transmitted to a control center instead of doing it in the device itself because the pattern must be determined according to a signal that is changing over time and management is thus facilitated; nevertheless, it is possible for this comparison to also be performed in the device itself if it has the pattern.

The reference consumption patterns of each of the television channels will be determined in the control center and comparison thereof with the patterns obtained by the geographically scattered devices could be done in the control center itself or in each of the devices for measuring after they receive the reference pattern from the control center.

The identification of electric equipment operating in a home for the subsequent treatment thereof by the electric power supply company, such that the subsequent statistical treatment which allows offering the results as an additional service to the customer is possible, is also an object of the present invention.

The invention additionally incorporates a pattern emitter in the electric consumption equipment.

With this strategy, electric consumption equipment has a means of identification through the predetermined pattern injected into the network during operation thereof together with the consumption being generated.

The advantage of this means is the unequivocal identification of the device and the easy discrimination with the presence of other electric equipment consuming from the same network.

In summary, in a preferred embodiment of the invention, a device like the one described is considered in which at least one reference pattern is the pattern corresponding to the consumption of a television tuning into a certain channel.

Likewise, in an embodiment variant, a device like the one described is considered in which each consumption device additionally incorporates a generating element which generates a predetermined consumption pattern injected on the electric supply line of the consumption device.

Finally, the measurement of the audience is also considered by making use of a device according to the invention in which the following essential steps are performed:
- a reading of the current fluctuations of the electric line identifying consumption patterns,
- a reading of one or more television channel signals to determine as many associated consumption patterns as there are channels,
- comparison between the consumption pattern with the reference patterns of the considered channel or channels,
- determination of the number of televisions (T) viewing each of the channels in order to calculate the audience.

The new device for measuring consumption patterns through the electric network accordingly represents an innovative structure of structural and constitutive features that have been unknown for such purpose up until now. These reasons, combined with its practical usefulness, provide sufficient grounds for obtaining the exclusive right which is sought.

### Description of the Drawings

To complement the description that is being made and for the purpose of aiding to better understand the features of the invention, a set of drawings is attached to the present specification as an integral part thereof, in which the following has been depicted with an illustrative and nonlimiting character:
Figure number 1 shows, by means of a block diagram, a schematic depiction of the new device for measuring consumption patterns through the electric network according to the invention, in which the main parts and elements comprised therein, as well as the arrangement and relation therebetween, can be seen.
Figure number 2 shows an operating scheme according to the present invention for determining the audience level in an electric network supplying a group of televisions.
Figure number 3 shows an operating scheme according to the present invention in which each consumption device has a generation element for generating an identification pattern.

### Preferred Embodiment of the Invention

In view of the described figures and according to the reference numbers used therein, a preferred embodiment of the device for measuring consumption patterns through the electric network is shown, comprising the parts and elements which are indicated and described in detail below.

As can be seen in said figures, the device (1) in question is essentially configured from a control block (2), formed by a microcontroller or similar processing unit and any other suitable auxiliary device (memory, control logic, etc.); a communications block (3), formed by a modulator/demodulator which adjusts the signal provided by the control block (2) for transmission thereof through the desired means of transmission; a supply block (4), which transforms the available supply into the voltages (8) suitable for the operation of all the components of the device (1); and a measuring block (5) in which the measurement of the electric consumption on the cable or line (7) of the electric distribution network, the conditioning of this measurement, comparison thereof, if necessary, with a predetermined consumption pattern, and sending thereof to the communications block (3) will be performed.

It should be pointed out that the control algorithms of the device (1) are implemented in the control block (2), so it has inputs for the signals coming from the measuring block (5), an indication of communication and data received from the communications block (3) and, should it exist, for the signal indicating the battery charge level from the supply block (4); and outputs for the signals directed to the measuring block (5) and an indication of communication and data sent to the communications block (3).

In turn, the communications block (3), which, as mentioned, is formed by a modulator/demodulator which adjusts the signal provided by the control block (2), can use different means of transmission in each case, depending on the specific location of the device, having inputs for the signal of indication of communication and data sent from the control block (2) and for the modulated signal originating in the remote system, in which the information sent by the latter must be detected, and outputs for the signal of indication of communication and data sent to the control block (2), and for the signal in which the information to be transmitted has been modulated.

Finally, in addition to transforming the available supply into the suitable voltages (8), the supply block (4) additionally, and only if it is considered necessary for the application thereof, can include a device for supplying current in the absence of supply, which can be a rechargeable battery, but is not limited thereto. The supply block (4) has inputs for the voltage (6) accessible for the device (1) and outputs for all the voltages (8) necessary for the operation of the device (1), and, should it exist, for the signal indicating the rechargeable battery charge level to the control block (2).

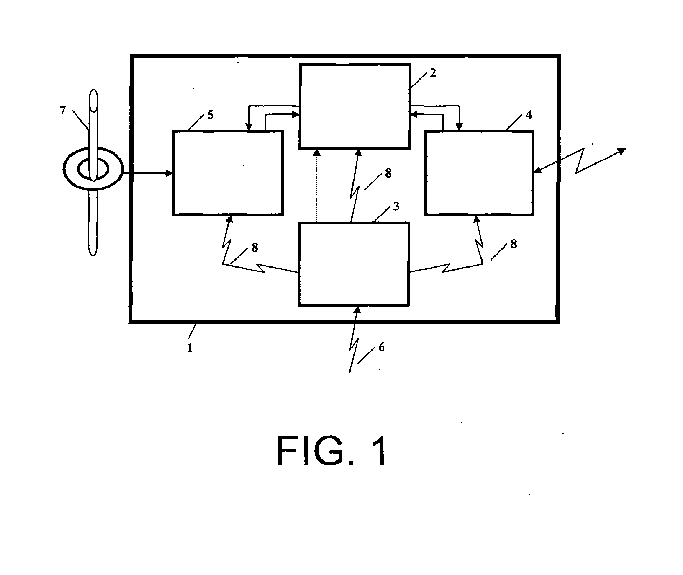

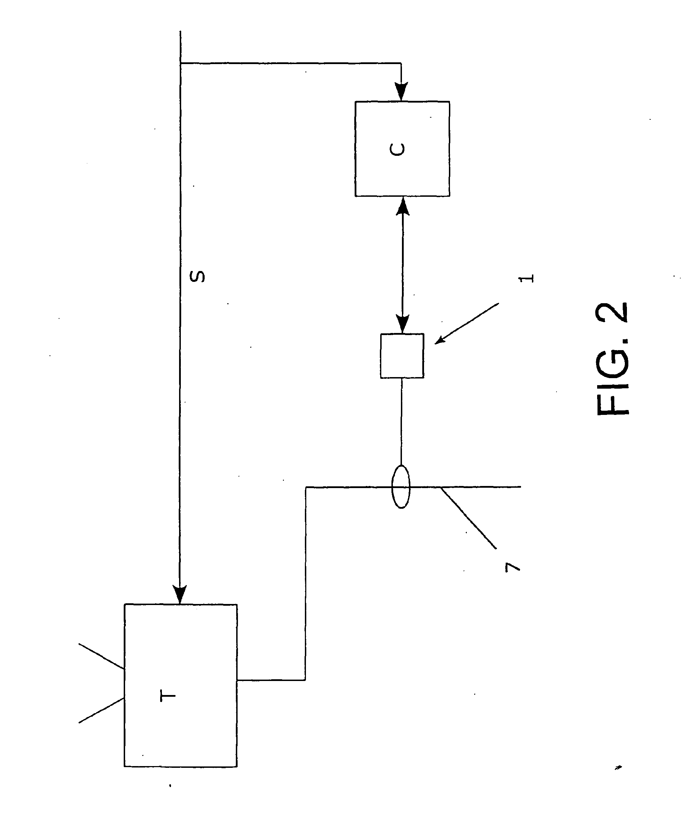

Considering Figure 2, and according to a first example of a method for use of the present invention, the consumption of a particular device, i.e., the television (T), in which its operation generates disturbances in the supply line (7) mainly due to the amplification stages of the audio and video signal, is considered.

The current fluctuations generated are not typical of a television (T) as a consumption device but rather those of the channel that is being viewed.

Different televisions (T) manufactured by different manufacturers tuning into one and the same channel will generate similar patterns since they are amplifying the same audio and video signal.

If several televisions (T) are supplied by one and the same electric line (7), the fluctuations will be added up, so it will be necessary to calculate the proportion of consumption that each channel is generating in order to establish the percentage of audience that each television channel has out of the total consumptions of all the channels.

In this embodiment, the pattern read by the device (1) is transmitted to a control center (C) which compares the pattern with the one generated from the signal (S) which corresponds to the reference channel.

If the control center (C) receives a signal (S) it is then capable of determining the number of televisions (T) that are viewing the channel which corresponds to the signal (S).

If in contrast the control center (C) receives the signal (S) of a plurality of television channels it will then be capable of establishing the percentage of audience for each of the channels.

The method of this first example can be modified, making the device (1) itself receive the signal (S) to generate the comparison pattern. Likewise, the comparison can be performed but the pattern can be provided by the control center (C) itself. Although these variations are possible, it has been found that it is more advantageous for the control center (C) to receive the signal, generate the reference patterns and subsequently compare them.

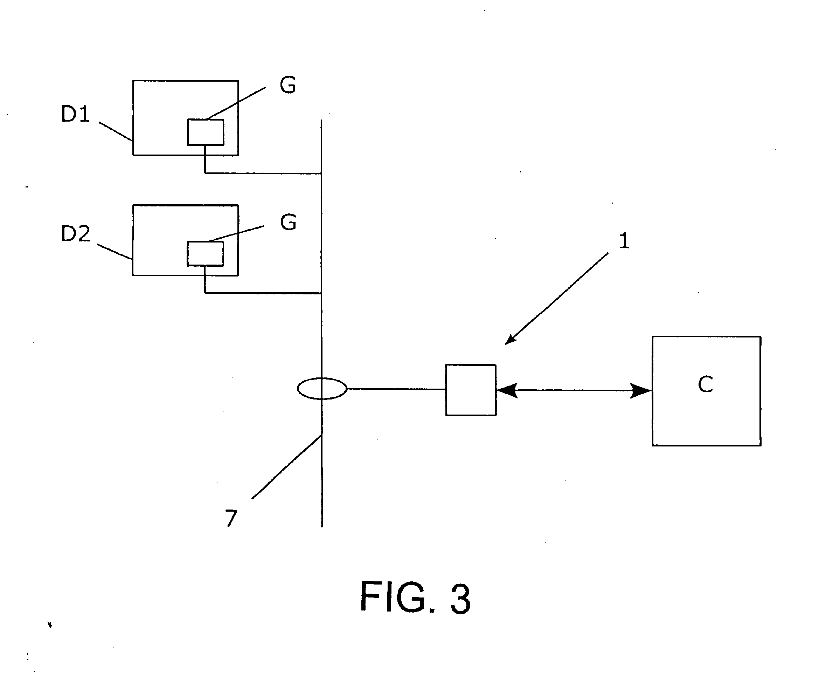

A second example of the method for use depicted in Figure 3 consists of identifying a group of consumption devices (Dl, D2) as a result of the presence of a generation element (G) for generating an identification pattern.

This generation element (G) for generating an identification pattern injects a pattern in the electric supply line (7) which is previously known by the measuring element, or at least it is identifiable as such.

In this case the need for deducing the type of device (Dl, D2) based on the fluctuations experienced by the electric supply line (7) is omitted, because the chance of failing in the identification is reduced since the pattern which is to be located is known.

With this operating scheme, the device (1) for measuring consumption patterns is capable of establishing which devices (Dl, D2) are operating and how much they consume without this identification depending on the mode of operation.

For example, a washing machine has different operation steps generating different patterns; however, if the reading is performed on the signal emitted by the generation element (G) for generating a pattern there is no chance of not knowing how to distinguish the device.

The uniqueness of the pattern used by the generation element for generating the pattern allows the distinction of the electric equipment used in each home to be possible without the reading point necessarily being the input of the home; but rather it can be performed at a point common to several homes.

This particular type of device can perform the comparison with the patterns known both in the same device (1) and in the control center (C).

The possibility of the device being capable of preparing statistical or detailed reports about the consumption of a group of associated consumption devices is also considered to be within the invention.

Having sufficiently described the nature of the present invention, as well as the manner of putting it into practice, it is not considered necessary to further explain it so that any person skilled in the art may understand its scope and the advantages derived therefrom, stating that within its essential features, other embodiments differing in detail from the embodiment indicated by way of example can be performed and they will also fall under the protection that is sought provided that its essential principle is neither altered, changed nor modified.

## Claims

1. A device for measuring consumption patterns through the electric network for taking measurements of the electric consumption in a line or cable of the electric distribution network, processing said measurements to generate a consumption pattern of the group of users using that distribution point, which allows sending them to a remote system to treat said information, performing a comparison with predetermined patterns, sending information about the operation thereof, receiving information to modify its performance or to access the mentioned predetermined patterns, **characterized in that** it comprises a control block (2), formed by a microcontroller or similar processing unit and any another auxiliary device (memory, control logic, etc.); a communications block (3), formed by a modulator/demodulator which adjusts the signal provided by the control block (2) for transmission thereof through the suitable means of transmission; a supply block (4), which transforms the available supply into the voltages (8) suitable for the operation of all the components of the device (1); and a measuring block (5) in which the measurement of the electric consumption on the cable or line (7) of the electric distribution network, the conditioning of this measurement, comparison thereof, if necessary, with a predetermined consumption pattern, and sending thereof to the communications block (3) will be performed.

2. The device for measuring consumption patterns through the electric network according to claim 1, **characterized in that** the control algorithms of the device (1) are implemented in the control block (2), having inputs for the signals coming from the measuring block (5), an indication of communication and data received from the communications block (3) and, should it exist, for the signal indicating the battery charge level from the supply block (4); and outputs for the signals directed to the measuring block (5) and an indication of communication and data sent to the communications block (3).

3. The device for measuring consumption patterns through the electric network according to claims 1 and 2, **characterized in that** the communications block (3) can use different means of transmission in each case, depending on the specific location of the device (1), having inputs for the signal of indication of communication and data sent from the control block (2) and for the modulated signal originating in the remote system, in which the information sent by the latter must be detected, and outputs for the signal of indication of communication and data sent to the control block (2), and for the signal in which the information to be transmitted has been modulated.

4. The device for measuring consumption patterns through the electric network according to claims 1 to 3, **characterized in that** the supply block (4), additionally, if it is considered necessary for the application thereof, can include a device for supplying current in the absence of supply, which can be a rechargeable battery, but is not limited thereto; and **in that** it has inputs for the voltage (6) accessible for the device (1) and outputs for all the voltages (8) necessary for the operation of the device (1), and, should it exist, for the signal indicating the rechargeable battery charge level to the control block (2).

5. The device for measuring consumption patterns through the electric network according to claims 1 to 4, **characterized in that** at least one reference pattern is the pattern corresponding to the consumption of a television (T) tuning into a certain channel.

6. The device for measuring consumption patterns through the electric network according to claim 5, **characterized in that** the device returns the number or the percentage of televisions (T) that are tuning into a certain channel.

7. The device for measuring consumption patterns through the electric network according to claim 5, **characterized in that** the reading is performed simultaneously on several channels.

8. The device for measuring consumption patterns through the electric network according to claim 5, **characterized in that** the comparison of the pattern read on the electric line (7) is performed in the device (1).

9. The device for measuring consumption patterns through the electric network according to claim 5, **characterized in that** the comparison of the pattern read on the electric line (7) is performed in the control center (C) after being transferred from the device (1) where the reading is performed.

10. A method for the use of a device for measuring consumption patterns through the electric network according to any of the previous claims for measuring the audience of one or more television channels, wherein the following is performed:
• a reading of the current fluctuations of the electric line identifying consumption patterns,
• a reading of one or more television channel signals to determine as many associated consumption patterns as there are channels,
• comparison between the consumption pattern with the reference patterns of the considered channel or channels,
• determination of the number of televisions (T) viewing each of the channels in order to calculate the audience.

11. The method for the use of a device for measuring consumption patterns through the electric network according to claim 10, **characterized in that** the reading determining the reference pattern or patterns is performed in the device for measuring.

12. The method for the use of a device for measuring consumption patterns through the electric network according to claim 11, **characterized in that** the comparison of patterns is performed in the device.

13. The method for the use of a device for measuring consumption patterns through the electric network according to claim 10, **characterized in that** the reading determining the reference pattern or patterns is performed in the control center (C).

14. The method for the use of a device for measuring consumption patterns through the electric network according to claim 13, **characterized in that** the comparison of patterns is performed in the control center (C).

15. The device for measuring consumption patterns through the electric network according to claims 1 to 4, **characterized in that** each consumption device has a generation element (G) for generating a predetermined consumption pattern injected on the electric supply line (7) of the consumption device.

16. The device for measuring consumption patterns through the electric network according to claim 15, **characterized in that** the device is capable of preparing statistical or detailed reports about the consumption of the group of consumption devices.

17. The device for measuring consumption patterns through the electric network according to claim 15, **characterized in that** the comparison of the pattern read on the electric line (7) is performed in the device (1).

18. The device for measuring consumption patterns through the electric network according to claim 15, **characterized in that** the comparison of the pattern read on the electric line (7) is performed in the control center (C) after being transferred from the device (1) where the reading is performed.
